(19) Europäisches Patentamt
European Patent Office
Office européen des brevets

(11) EP 1 660 548 B1

(12) **EUROPEAN PATENT SPECIFICATION**

(45) Date of publication and mention of the grant of the patent:
**27.08.2008 Bulletin 2008/35**

(21) Application number: **04764736.7**

(22) Date of filing: **02.09.2004**

(51) Int Cl.:
***C08F 293/00*** *(2006.01)* ***C08F 2/38*** *(2006.01)*

(86) International application number:
**PCT/EP2004/009777**

(87) International publication number:
**WO 2005/021612 (10.03.2005 Gazette 2005/10)**

(54) **NEW COPOLYMER HAVING A CONTROLLED STRUCTURE, AND USE THEREOF**

NEUES COPOLYMER MIT KONTROLLIERTEM AUFBAU UND VERWENDUNG DAVON

NOUVEAU COPOLYMERE A STRUCTURE CONTROLEE ET UTILISATION DE CELUI-CI

(84) Designated Contracting States:
**AT BE BG CH CY CZ DE DK EE ES FI FR GB GR HU IE IT LI LU MC NL PL PT RO SE SI SK TR**

(30) Priority: **03.09.2003 US 499668 P**

(43) Date of publication of application:
**31.05.2006 Bulletin 2006/22**

(73) Proprietors:
- **RHODIA INC.**
  **Cranbury, NJ 08512-7500 (US)**
- **CENTRE NATIONAL DE LA RECHERCHE SCIENTIFIQUE (CNRS)**
  **75794 Paris Cedex 16 (FR)**

(72) Inventors:
- **CROOKS, Regan**
  **Hightstown, NJ 08520 (US)**
- **JACQUIN, Marc**
  **Princeton, New Jersey 08540 (US)**
- **MORVAN, Mikel**
  **Princeton, New Jersey 08540 (US)**
- **THEODOLY LANNES, Olivier**
  **Princeton, New Jersey 08540 (US)**

(74) Representative: **Boittiaux, Vincent et al**
**Rhodia Services,**
**DPI,**
**40, rue de la Haie-Coq**
**93306 Aubervilliers Cedex (FR)**

(56) References cited:
**WO-A-02/070861**
**WO-A-02/077075**
**WO-A-02/090409**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 660 548 B1

## Description

### BACKGROUND OF THE INVENTION

The invention concerns a new copolymer useful in different areas. Recent developments in the art of polymerization have allowed designing new polymers, having new polymer compositions, and/or new polymer structures, in order to tune their properties. These recent developments include for example free radical living polymerization processes such as the processes described in documents WO 98/01478, WO 98/58974, WO02/26836. These polymerization processes, among others, are especially useful for making block copolymers.

Thus, amphiphilic polymers having a hydrophilic block and a hydrophobic block have been described. Some of their properties and/or interactions with other compounds have also been described. Examples of amphiphilic block copolymers have been described in documents US2002-0198347-A1, WO 02/28932, EP 887362, WO 0177198, WO 01/16187, and US2003-0013799-A1. Typical hydrophobic blocks include styrene and esters of acrylic acid such as butyl acrylate.

Block copolymers having a hydrophilic neural block and a hydrophilic cationic block have also been described, for example in document WO 03/050185.

Other examples of block copolymers include triblock A-B-A copolymers, wherein block A is a rigid block and block B is a soft block. Some polymers have been described in documents WO 02/28357, and US 5,314,962.

While these polymers present interesting properties, there is a need to find new polymers, having different properties, giving a benefit in formulations where they are to be used. In other words, there is a need to tune the properties of copolymers. Formulations that are interesting for comprising a tuned copolymer include, but are not limited to, pharmaceutical formulations, home-care formulations (laundry, dish-washing, hard-surface cleaning), personal-care applications (rinse-of formulations such as shampoos and shower gels, leave-on formulation such as creams, milks ,make-up...), agrochemical formulations, and various industrial formulations, for example formulations used in the art of polymerizing or coating, and paints formulations comprising a polymer or a resin precursor. Properties to be tuned include, but are not limited to, adsorption onto a solid or liquid surface, emulsifying or co-emulsifying properties, dispersing properties (dispersing solids), triggering precipitation or deposition of compounds comprised in a formulation, conditioning or aspect modifying or feeling modifying on hair or skin, formation of structures such as vesicles, capsules, micelles, or anisotropic objects. Other properties include the ability of being formulated with other compounds (compatibility and/or solubility).

### BRIEF SUMMARY OF THE INVENTION

The invention solves the need mentioned above by providing, in a first aspect of the invention, a copolymer having a controlled structure, comprising at least two parts, part A and part B, said parts having different compositions, wherein:

- part A is a hydrophilic or hydrophobic part, and
- part B is a part comprising units deriving from a monomer B having the following formula:

$$CH_2{=}CR^1CO\text{-}[O\text{-}(CH_2)_p\text{-}]_nOR^2 \text{ or } CH_2{=}CR^1CO\text{-}[O\text{-}CH_{2\text{-}a}(CH_3)_a\text{-}\ CH_{2\text{-}b}(CH_3)_b\text{-}]_nOR^2$$

wherein:

- $R^1$ is hydrogen or a methyl group,
- p, which is identical or different, is 2 or 3,
- a, which is identical or different, is 0 or 1,
- b, which is identical or different, is 0 or 1,
- a+b = 0 or 1,
- p = 2+a+b,
- n is an average number being greater than or equal to 1, and
- $R^2$ is an alkyl group.

In a preferred embodiment, it is a block copolymer having at least two blocks, block A and block B, wherein:

- block A is a hydrophilic block, and
- block B is a hydrophobic block comprising units deriving from a monomer B having the following formula:

$$CH_2=CR^1CO-[O-(CH_2)_p-]_nOR^2 \text{ or } CH_2=CR^1CO-[O-CH_{2-a}(CH_3)_a- CH_{2-b}(CH_3)_b-]_nOR^2$$

wherein:

- $R^1$ is hydrogen or a methyl group,
- p, which is identical or different, is 2 or 3,
- a, which is identical or different, is 0 or 1,
- b, which is identical or different, is 0 or 1,
- a+b = 0 or 1,
- p = 2+a+b,
- n is an average number being greater than or equal to 1, and
- $R^2$ is an alkyl group.

In another aspect, the invention relates to a method for tuning the properties of a copolymer, preferably a block copolymer, having a part, preferably a block, comprising units deriving from a monomer B having the following formula:

$$CH_2=CR^1CO-[O-(CH_2)_p-]_nOR^2 \text{ or } CH_2=CR^1CO-[O-CH_{2-a}(CH_3)a- CH_{2-b}(CH_3)_b-]_nOR^2$$

wherein:

- $R^1$ is hydrogen or a methyl group,
- p, which is identical or different, is 2 or 3,
- a, which is identical or different, is 0 or 1,
- b, which is identical or different, is 0 or 1,
- a+b = 0 or 1,
- p = 2+a+b,
- n is an average number being greater than or equal to 1, and
- $R^2$ is an alkyl group.

In another aspect, the invention relates to the use of a copolymer as mentioned above, preferably a block copolymer, in formulations such as pharmaceutical formulations, home-care formulations, personal-care formulations, agricultural formulations, and industrial formulations as mentioned above.

In another aspect, the invention relates to the use of the copolymer, preferably a block copolymer, as mentioned above, for tuning at least one of the properties mentioned above.

In another aspect, the invention relates to vesicles or capsules having the copolymer.

## DETAILED DESCRIPTION OF THE INVENTION

### Definitions

In the present specification, the molecular weight of a polymer, copolymer, part or block refers to the weight-average molecular weight of said polymer, copolymer, part or block. The weight-average molecular weight of the polymer or copolymer can be measured by gel permeation chromatography (GPC). In the present specification, the molecular weight of a part or block refers to the molecular weight calculated from the amounts of monomers, polymers, initiators and/or transfer agents used to make the said part or block. The one skilled in the art knows how to calculate these molecular weights. The ratios by weight between parts or blocks refer to the ratios between the amounts of the compounds used to make said parts or blocks, considering an extensive polymerization.

Typically, the molecular weight M of a block or part is calculated according to the following formula: $M = \sum_i M_i * \frac{n_i}{n_{precursor}}$, wherein $M_i$ is the molecular weight of a monomer i, $n_i$ is the number of moles of a monomer i, and $n_{precusor}$ is the number of moles of a compound the macromolecular chain of the block will be linked to. Said compound may be a transfer agent or a transfer group, or a previous block or part. If it is a previous block or part, the number of moles may be considered as the number of moles of a compound the macromolecular chain of said previous block or part has been linked to, for example a transfer agent or a transfer group. It may be also obtained by a calculation

from a measured value of the molecular weight of said previous block or part. If two blocks or parts are simultaneously grown from a previous block or part, for example at ends, the molecular weight calculated according to the above formula should be divided by two.

In the present specification, a unit deriving from a monomer is understood as a unit that may be directly obtained from the said monomer by polymerizing. Thus, a unit deriving from an ester of acrylic or methacrylic acid does not encompass a unit of formula $-CH-CH(COOH)$, $-CH-C(CH_3)(COOH)$, $-CH-CH(OH)$, $-CH-C(CH_3)(OH)$, obtained for example by polymerizing an ester of acrylic or methacrylic acid, or a vinyl acetate, and then hydrolyzing. A unit deriving from acrylic acid or methacrylic acid encompasses for example a unit obtained by polymerizing a monomer (for example an alkyl acrylate or methacylate) and then reacting (for example hydrolyzing) to obtain units of formula $-CH-CH(COOH)$ or $-CH-C(CH_3)(COOH)$. A unit deriving from vinyl alcohol encompasses for example a unit obtained by polymerizing a monomer (for example a vinyl ester) and then reacting (for example hydrolyzing) to obtain units of formula $-CH-CH(OH)$ or $-CH-C(CH_3)(OH)$.

Description of the copolymer

The parts of a copolymer having a controlled structure can be for example blocks, linear backbones, side chains, grafts, «hair» or branches of microgels or stars, cores of microgels of stars, or parts of polymeric chains having different concentrations of different units. Thus, the copolymer can have one of the following structures:

- block copolymer comprising at least two blocks, part A corresponding to one block, part B corresponding to another block, part A having optionally a composition gradient,
- comb copolymer or grafted copolymer, having a backbone and side chains, with part A corresponding to the backbone and part B corresponding to side chains, or with part B corresponding to the backbone and part A corresponding to side chains,
- star copolymer or microgel copolymer or gelled micelle copolymer, comprising a polymeric core or non polymeric core, and peripheral polymeric chains, one part A or B corresponding to the core, and the other part corresponding to peripheral polymeric chains.

In a preferred embodiment, the copolymer is a block copolymer. By block copolymer, it is meant a copolymer comprising at least two different blocks, block A and block B, linked together. The block copolymer is a sequenced polymer, for example a di-block or a triblock copolymer. Blocks may also be random copolymers. Examples of preferred linear sequenced block copolymers are (block A)-(block B) diblock copolymers, (block A)-(block B)-(block A) triblock copolymers, and (block B)-(block A)-(block B) triblock copolymers.

By linear polymer, it is meant a linear homopolymer, or a linear random copolymer, as opposed to a block copolymer.

A block or part is usually defined by repeating units it comprises. A block or part may be a copolymer, comprising several kind of repeating units, deriving form several monomers. Hence, block or part A and block or part B are different polymers, deriving from different monomers, but they may comprise some common repeating units (copolymers). Block or part A and block or part B preferably do not comprise more than 50% of a common repeating unit (deriving from the same monomer).

Part A, for example block A, is hydrophilic or hydrophobic. Part B, for example block B is hydrophobic or hydrophobic. Hydrophilic or Hydrophobic properties of a block or part refer to the property that said block or part would have without the other block or part, that is the property of a polymer consisting of the same repeating units than said block or part, having the same molecular weight. By hydrophilic block, part, polymer or copolymer, it is meant that the block, part, polymer or copolymer does not phase separate macroscopically in water at a concentration of from 0,01 % to 10% by weight, at a temperature from 20°C to 30°C. By hydrophobic block, part, polymer or copolymer, it is meant that the block, part, polymer or copolymer does phase separate macroscopically in the same conditions.

In an interesting embodiment, part A, for example block A, is a hydrophilic part, for example a hydrophilic block, and part B, for example block B, is a hydrophobic part, for example a hydrophobic block.

Part B, for example block B, comprises units deriving from a monomer B having the following formula:

$$CH_2{=}CR^1CO\text{-}[O\text{-}(CH_2)_p\text{-}]_nOR^2 \text{ or } CH_2{=}CR^1CO\text{-}[O\text{-}CH_{2\text{-}a}(CH_3)_a\text{-}\ CH_{2\text{-}b}(CH_3)_b\text{-}]_nOR^2$$

wherein:

- $R^1$ is hydrogen or a methyl group,
- p, which is identical or different, is 2 or 3,
- a, which is identical or different, is 0 or 1,

- b, which is identical or different, is 0 or 1,
- a+b = 0 or 1,
- p = 2+a+b,
- n is an average number being greater than or equal to 1, and
- $R^2$ is an alkyl group.

The group $R^2$ is an alkyl group such as a methyl group, an ethyl group or a propyl group. The number p is 2 or 3. It means that the group $[O-(CH_2)_p-]$ or $-[O-CH_{2-a}(CH_3)_a- CH_{2-b}(CH_3)_b-]$ is an ethoxy group (p=2) or a propoxy group (p=3, a+b=1). As p can be identical or different, the sequence of formula $-[O-(CH_2)_p-]_n$ or $-[O-CH_{2-a}(CH_3)_a- CH_{2-b}(CH_3)_b-]$ is a sequence having ethoxy groups and/or propoxy groups. If the sequence has ethoxy and propoxy groups, the sequence can be a random sequence or a block sequence (one or several block of ethoxy groups and one or several block of propoxy groups). The number p could have been also defined as an average number being of from 2 to 3. The numbers a and b could have been also defined as average numbers being of from 0 to 1, with a+b being of from 0 to 1.

In a preferred embodiment, n is greater than or equal to 2, and $R^2$ is a methyl group or an ethyl group. The value of n can be of up to 25 or even more. For example n can be of about 2, 3, 4, 5, 6, 7, 8, 9, 10, 12, 14, 18, 20, 22, or 25.

In a preferred embodiment p is 2, n is greater than or equal to 2, and $R^2$ is a methyl group or an ethyl group. Diethyleneglycolethyletheracrylate (DEGA) or diethyleneglycolethylethermethacrylate are examples of useful monomers B. Methoxyethylacrylate is not especially recommended. Nonethyleneglycolmethyletheracrylate (nEGA) or nonethyleneglycolmethylethermethacrylate are examples of other monomers B.

It is mentioned that monomer B provides advantages over monomers having dangling hydroxy groups such as hydroxyethyl(meth) acrylates and polythoxylated compounds: monomer B provides a very-low side reaction cross-linking.

In an interesting embodiment:

- part A, for example block A, is a hydrophilic part, for example block,
- part B, for example block B, is a hydrophobic part, for example block, and
- monomer B is diethyleneglycolethyletheracrylate or diethyleneglycolethylethermethacrylate.

Part B, for example block B, may comprise further units, for example units deriving from a hydrophobic or hydrophilic monomer. Examples of hydrophilic monomers are listed below for part A, for example block A. In a particular embodiment, part B, for example block B, is a copolymer, for example random or gradient, comprising units deriving from monomer B and other units deriving from a hydrophobic or hydrophilic monomer. Having said further units in part B, for example block B, can help in further tuning the properties of the polymer, for example adsorption properties onto a solid or liquid surface, solubility/compatibility with other compounds. These adsorption properties are useful in designing formulations having a compound to be deposited onto a solid surface, in modifying a solid surface to be more or less hydrophilic or hydrophobic, in designing formulations having solid particles dispersed in an liquid (tuning the properties of the copolymer as a dispersant), and in designing formulations in the form of an emulsions (tuning the properties of the copolymer as an emulsifier or as a co-emulsifier).

Examples of hydrophobic units (in part A, for example block A, or in part B, for example block B), deriving from hydrophobic monomers, include units deriving form hydrophobic monomers selected from the group consisting of:

- alkylesters of an alpha-ethylenically-unsaturated, preferably mono-alpha-ethylenically-unsaturated, monocarboxylic acid, such as methylacrylate, ethylacrylate, n-propylacrylate, n-butylacrylate, methylmethacrylate, ethylmethacrylate, n-propylmethacrylate, n-butylmethacrylate, and 2-ethyl-hexyl acrylate, 2-ethyl-hexyl methacrylate, isooctyl acrylate, isooctyl methacrylate, lauryl acrylate, lauryl methacrylate,
- vinyl Versatate,
- acrylonitrile,
- vinyl nitriles, comprising from 3 to 12 carbon atoms,
- vinylamine amides, and
- vinylaromatic compounds such as styrene.

Examples of hydrophilic units (in part A, for example block A, or in part B, for example block B), deriving from hydrophilic monomers, include units deriving form hydrophilic monomers selected from the group consisting of:

- ethylene oxide,
- vinyl alcohol,
- vinyl pyrrolidone,
- acrylamide, methacrylamide,

- polyethylene oxide (meth)acrylate (i.e. polyethoxylated (meth)acrylic acid),
- hydroxyalkylesters of alpha-ethylenically-unsaturated, preferably mono-alpha-ethylenically-unsaturated, monocarboxylic acids, such as 2-hydroxyethylacrylate, and
- hydroxyalkylamides of alpha-ethylenically-unsaturated, preferably mono-alpha-ethylenically-unsaturated, monocarboxylic acids,
- dimethylaminoethyl (meth)acrylate, dimethylaminopropyl (meth)acrylate, ditertiobutylaminoethyl (meth)acrylate, dimethylaminomethyl (meth)acrylamide, dimethylaminopropyl (meth)acrylamide;
- ethylenimine, vinylamine, 2-vinylpyridine, 4- vinylpyridine;
- trimethylammonium ethyl (meth)acrylate chloride, trimethylammonium ethyl (meth)acrylate methyl sulphate, dimethylammonium ethyl (meth)acrylate benzyl chloride, 4-benzoylbenzyl dimethylammonium ethyl acrylate chloride, trimethyl ammonium ethyl (meth)acrylamido (also called 2-(acryloxy)ethyltrimethylammonium, TMAEAMS) chloride, trimethylammonium ethyl (meth)acrylate (also called 2-(acryloxy)ethyltrimethylammonium, TMAEAMS) methyl sulphate, trimethyl ammonium propyl (meth)acrylamido chloride, vinylbenzyl trimethyl ammonium chloride,
- diallyldimethyl ammonium chloride,
- monomers having the following formula:

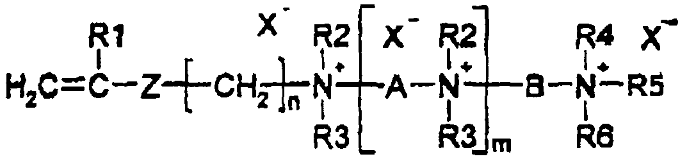

wherein

- $R_1$ is a hydrogen atom or a methyl or ethyl group;
- $R_2$, $R_3$, $R_4$, $R_5$ and $R_6$, which are identical or different, are linear or branched $C_1$-$C_6$, preferably $C_1$-$C_4$, alkyl, hydroxyalkyl or aminoalkyl groups;
- m is an integer from 1 to 10, for example 1;
- n is an integer from 1 to 6, preferably 2 to 4;
- Z represents a -C(O)O- or -C(O)NH- group or an oxygen atom;
- A represents a $(CH_2)_p$ group, p being an integer from 1 to 6, preferably from 2 to 4;
- B represents a linear or branched $C_2$-$C_{12}$, advantageously $C_3$-$C_6$, polymethylene chain optionally interrupted by one or more heteroatoms or heterogroups, in particular O or NH, and optionally substituted by one or more hydroxyl or amino groups, preferably hydroxyl groups;
- X, which are identical or different, represent counterions, and

- their mixtures, and macromonomers deriving therefrom,
- alpha-ethylenically-unsaturated, preferably mono-alpha-ethylenically-unsaturated, monomers comprising a phosphate or phosphonate group,
- alpha-ethylenically-unsaturated, preferably mono-alpha-ethylenically-unsaturated, monocarboxylic acids, such as acrylic acid, methacrylic acid
- monoalkylesters of alpha-ethylenically-unsaturated, preferably mono-alpha-ethylenically-unsaturated, dicarboxylic acids,
- monoalkylamides of alpha-ethylenically-unsaturated, preferably mono-alpha-ethylenically-unsaturated, dicarboxylic acids,
- alpha-ethylenically-unsaturated, preferably mono-alpha-ethylenically-unsaturated, compounds comprising a sulphonic acid group, and salts of alpha-ethylenically-unsaturated, preferably mono-alpha-ethylenically-unsaturated, compounds comprising a sulphonic acid group, such as vinyl sulphonic acid, salts of vinyl sulfonic acid, vinylbenzene sulphonic acid, salts of vinylbenzene sulphonic acid, alpha-acrylamidomethylpropanesulphonic acid, salts of alpha-acrylamidomethylpropanesulphonic acid 2-sulphoethyl methacrylate, salts of 2-sulphoethyl methacrylate, acrylamido-2-methylpropanesulphonic acid (AMPS), salts of acrylamido-2-methylpropanesulphonic acid, and styrenesulfonate (SS)

Part A, for example block A, more preferably comprises units deriving from monomers selected from the group consisting of:

- acrylic acid, methacrylic acid,
- acrylamide, methacrylamide,
- vinyl sulphonic acid, salts of vinyl sulfonic acid,
- vinylbenzene sulphonic acid, salts of vinylbenzene sulphonic acid,
- alpha-acrylamidomethylpropanesulphonic acid, salts of alpha-acrylamidomethylpropanesulphonic acid
- 2-sulphoethyl methacrylate, salts of 2-sulphoethyl methacrylate,
- acrylamido-2-methylpropanesulphonic acid (AMPS), salts of acrylamido-2-methylpropanesulphonic acid, and
- styrenesulphonate (SS).

Monomer B is a neutral monomer. Thus part B, for example block B, can be neutral. Par B, for example block B, is preferably a neutral block. However it is not excluded that part B, for example block B, comprises other units than units deriving from monomer B, said units being neutral, anionic or cationic). Part A, for example block A, might be discriminated as regard to its electrical behavior or nature. It means that part A, for example block A, may be a neutral part, for example block, or a polyionic part, for example block (a polyanionic part or block, or a polycationic part or block). It is further mentioned the electrical behavior or nature (neutral, polyanionic or polycationic) may depend on the pH. By polyionic it is meant that the part or block comprises ionic (anionic or cationic) repetitive units whatever the pH, or that the part or block comprises repetitive units that may be neutral or ionic (anionic or cationic) depending on the pH. (the units are potentially ionic). A unit that may be neutral or ionic (anionic or cationic), depending on the pH, will be thereafter referred as an ionic unit (anionic or cationic), or as a unit deriving from an ionic monomer (anionic or cationic), whatever it is in a neutral form or in an ionic form (anionic or cationic).

Examples of polycationic parts, for example blocks, are parts, for example blocks, comprising units deriving from cationic monomers such as:

- aminoalkyl (meth)acrylates, aminoalkyl (meth)acrylamides,
- monomers, including particularly (meth)acrylates, and (meth)acrylamides derivatives, comprising at least one secondary, tertiary or quaternary amine function, or a heterocyclic group containing a nitrogen atom, vinylamine or ethylenimine;
- diallyldialkyl ammonium salts;
- their mixtures, their salts, and macromonomers deriving from therefrom.

Examples of cationic monomers include:

- dimethylaminoethyl (meth)acrylate, dimethylaminopropyl (meth)acrylate, ditertiobutylaminoethyl (meth)acrylate, dimethylaminomethyl (meth)acrylamide, dimethylaminopropyl (meth)acrylamide;
- ethylenimine, vinylamine, 2-vinylpyridine, 4- vinylpyridine;
- trimethylammonium ethyl (meth)acrylate chloride, trimethylammonium ethyl (meth)acrylate methyl sulphate, dimethylammonium ethyl (meth)acrylate benzyl chloride, 4-benzoylbenzyl dimethylammonium ethyl acrylate chloride, trimethyl ammonium ethyl (meth)acrylamido (also called 2-(acryloxy)ethyltrimethylammonium, TMAEAMS) chloride, trimethylammonium ethyl (meth)acrylate (also called 2-(acryloxy)ethyltrimethylammonium, TMAEAMS) methyl sulphate, trimethyl ammonium propyl (meth)acrylamido chloride, vinylbenzyl trimethyl ammonium chloride,
- diallyldimethyl ammonium chloride,
- monomers having the following formula:

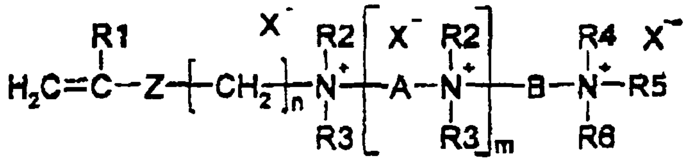

wherein

- $R_1$ is a hydrogen atom or a methyl or ethyl group;
- $R_2$, $R_3$, $R_4$, $R_5$ and $R_6$, which are identical or different, are linear or branched $C_1$-$C_6$, preferably $C_1$-$C_4$, alkyl, hydroxyalkyl or aminoalkyl groups;
- m is an integer from 1 to 10, for example 1;
- n is an integer from 1 to 6, preferably 2 to 4;

- Z represents a -C(O)O- or -C(O)NH- group or an oxygen atom;
- A represents a $(CH_2)_p$ group, p being an integer from 1 to 6, preferably from 2 to 4;
- B represents a linear or branched $C_2$-$C_{12}$, advantageously $C_3$-$C_6$, polymethylene chain optionally interrupted by one or more heteroatoms or heterogroups, in particular O or NH, and optionally substituted by one or more hydroxyl or amino groups, preferably hydroxyl groups;
- X, which are identical or different, represent counterions, and

- their mixtures, and macromonomers deriving therefrom.

Examples of anionic parts, for example blocks, are parts, for example blocks, comprising units deriving from anionic monomers selected from the group consisting of:

- alpha-ethylenically-unsaturated, preferably mono-alpha-ethylenically-unsaturated, monomers comprising a phosphate or phosphonate group,
- alpha-ethylenically-unsaturated, preferably mono-alpha-ethylenically-unsaturated, monocarboxylic acids,
- monoalkylesters of alpha-ethylenically-unsaturated, preferably mono-alpha-ethylenically-unsaturated, dicarboxylic acids,
- monoalkylamides of alpha-ethylenically-unsaturated, preferably mono-alpha-ethylenically-unsaturated, dicarboxylic acids,
- alpha-ethylenically-unsaturated, preferably mono-alpha-ethylenically-unsaturated, compounds comprising a sulphonic acid group, and salts of alpha-ethylenically-unsaturated compounds comprising a sulphonic acid group.

Preferred anionic parts, for example blocks, include parts, for example blocks, comprising deriving from at least one anionic monomer selected from the group consisting of:

- acrylic acid, methacrylic acid,
- vinyl sulphonic acid, salts of vinyl sulfonic acid,
- vinylbenzene sulphonic acid, salts of vinylbenzene sulphonic acid,
- alpha-acrylamidomethylpropanesulphonic acid, salts of alpha-acrylamidomethylpropanesulphonic acid
- 2-sulphoethyl methacrylate, salts of 2-sulphoethyl methacrylate,
- acrylamido-2-methylpropanesulphonic acid (AMPS), salts of acrylamido-2-methylpropanesulphonic acid, and
- styrenesulfonate (SS).

Examples of neutral units (in part A, for example block A, or other units in part B, for example block B) include the units deriving from at least one monomer selected from the group consisting of:

- acrylamide, methacrylamide,
- amides of alpha-ethylenically-unsaturated, preferably mono-alpha-ethylenically-unsaturated, monocarboxylic acids,
- esters of an alpha-ethylenically-unsaturated, preferably mono-alpha-ethylenically-unsaturated, monocarboxylic acid, for example alkyl esters such as such as methylacrylate, ethylacrylate, n-propylacrylate, n-butylacrylate, methylmethacrylate, ethylmethacrylate, n-propylmethacrylate, n-butylmethacrylate, 2-ethyl-hexyl acrylate, or hydroxyalkyl esters such as 2-hydroxyethylacrylate,
- polyethylene and/or polyporpylene oxide (meth)acrylates (i.e. polyethoxylated and/or polypropoxylated (meth)acrylic acid),
- vinyl alcohol,
- vinyl pyrrolidone,
- vinyl acetate, vinyl Versatate,
- vinyl nitriles, preferably comprising from 3 to 12 carbon atoms,
- acrylonitrile,
- vinylamine amides,
- vinyl aromatic compounds, such as styrene, and
- mixtures thereof.

Part A, for example block A, and/or part B, for example block B, preferably derive from mono-alpha-ethylenically unsaturated monomers. More precisely, it is meant that for part A, for example block A, and/or part B, for example block B, at least 50% of the repeating units are preferably mono-alpha-ethylenically-unsaturated monomers derived units. The monomers listed above are mono-alpha-unsaturated monomers, except propylene oxide and ethylene oxide. It is mentioned than monomer B is a mono-alpha-ethylenically unsaturated monomer.

Of course, it is not excluded that part A, for example block A, comprise both units deriving from hydrophobic and hydrophilic monomers.

The copolymers according to the invention can be obtained by any suitable method, for example by free-radicals polymerization, controlled or not, or by ring-opening polymerization (including anionic or cationic polymerization), or by anionic or cationic polymerization, or by chemical modification of a polymer.

Free-radicals polymerizations, referred to as "living" or "controlled" are preferred.

There are for example several methods for making block copolymers. Some methods for making such copolymers are provided below.

It is possible for example to use anionic polymerization with sequential addition of 2 monomers as described for example by Schmolka, J. Am. Oil Chem. Soc. 1977, 54, 110; or alternatively Wilczek-Veraet et al., Macromolecules 1996, 29, 4036. Another method which can be used consists in initiating the polymerization of a block polymer at each of the ends of another block polymer as described for example by Katayose and Kataoka, Proc. Intern. Symp. Control. Rel. Bioact. Materials, 1996, 23, 899.

In the context of the present invention, it is recommended to use living or controlled polymerization as defined by Quirk and Lee (Polymer International 27, 359 (1992)). Indeed, this particular method makes it possible to prepare polymers with a narrow polydispersity and in which the length and the composition of the blocks are controlled by the stoichiometry and the degree of conversion. In the context of this type of polymerization, there are more particularly recommended the copolymers which can be obtained by any so-called living or controlled polymerization method such as, for example:

- free-radical polymerization controlled by xanthates according to the teaching of Application WO 98/58974 and Patent US 6,153,705,
- free-radical polymerization controlled by dithioesters according to the teaching of Application WO 98/01478,
- free-radical polymerization controlled by dithioesters according to the teaching of Application WO 99/35178,
- free-radical polymerization controlled by dithiocarbamates according to the teaching of Application WO 99/35177,
- free-polymerization using nitroxide precursors according to the teaching of Application WO 99/03894,
- free-radical polymerization controlled by dithiocarbamates according to the teaching of Application WO 99/31144,
- free-radical polymerization controlled by dithiocarbazates according to the teaching of Application WO 02/26836,
- free-radical polymerization controlled by halogenated Xanthates according to the teaching of Application WO 00/75207 and US Application 09/980,387,
- free-radical polymerization controlled by dithiophosphoroesters according to the teaching of Application WO 02/10223,
- free-radical polymerization controlled by a transfer agent in the presence of a disulphur compound according to the teaching of Application WO 02/22688,
- atom transfer radical polymerization (ATRP) according to the teaching of Application WO 96/30421,
- free-radical polymerization controlled by iniferters according to the teaching of Otu et al., Makromol. Chem. Rapid. Commun., 3, 127 (1982),
- free-radical polymerization controlled by degenerative transfer of iodine according to the teaching of Tatemoto et al., Jap. 50, 127, 991 (1975), Daikin Kogyo Co Ltd Japan, and Matyjaszewski et al., Macromolecules, 28, 2093 (1995),
- group transfer polymerization according to the teaching of Webster O.W., "Group Transfer Polymerization", p. 580-588, in the "Encyclopedia of Polymer Science and Engineering", Vol. 7, edited by H.F. Mark, N.M. Bikales, C.G. Overberger and G. Menges, Wiley Interscience, New York, 1987,
- radical polymerization controlled by tetraphenylethane derivatives (D. Braun et al., Macromol. Symp., 111, 63 (1996)),
- radical polymerization controlled by organocobalt complexes (Wayland et al., J. Am. Chem. Soc., 116, 7973 (1994)).

Preferred processes are sequenced living free-radical polymerization processes, involving the use of a transfer agent. Preferred transfer agents are agents comprising a group of formula -S-C(S)-Y-, -S-C(S)-S-, or -S-P(S)-Y-, or -S-P(S)-S-, wherein Y is an atom different from sulfur, such as an oxygen atom, a nitrogen atom, and a carbon atom. They include dithioester groups, thioether-thione groups, dithiocarbamate groups, dithiphosphoroesters, dithiocarbazates, and xanthate groups. Examples of groups comprised in preferred transfer agents include groups of formula -S-C(S)-NR-NR'$_2$, -S-C(S)-NR-N=CR'$_2$, -S-C(S)-O-R, -S-C(S)-CR=CR'$_2$, and -S-C(S)-X, wherein R and R' are or identical or different hydrogen atoms, or organic groups such as hydrocarbyl groups, optionally substituted, optionally comprising heteroatoms, and X is an halogen atom. A preferred polymerization process is a living radical polymerization using xanthates.

Copolymers obtained by a living or controlled free-radical polymerization process may comprise at least one transfer agent group at an end of the polymer chain. In particular embodiment such a group is removed or deactivated.

A "living" or "controlled" radical polymerization process used to make block copolymers comprises the steps of:

a) reacting a mono-alpha-ethylenically-unsaturated monomer, at least a free radicals source compound, and a

transfer agent, to obtain a first block, the transfer agent being bounded to said first block,

b1) reacting the first block, another mono-alpha-ethylenically-unsaturated monomer, and, optionally, at least a radical source compound, to obtain a di-block copolymer,

b2) optionally, repeating n times (n being equal to or greater than 0) step b1) to obtain a (n-2)-block copolymer, and then

c) optionally, reacting the transfer agent with means to render it inactive.

For example, a "living" or "controlled" free-radicals polymerization process used to make di-block copolymers comprises the steps of:

a) reacting a mono-alpha-ethylenically-unsaturated monomer, at least a free radicals source compound, and a transfer agent, to obtain a first block, the transfer agent being bounded to said first block,

b) reacting the first block, another mono-alpha-ethylenically-unsaturated monomer, and, optionally, at least a radical source compound, to obtain a di-block copolymer, and then

c) optionally, reacting the transfer agent with means to render it inactive.

During step a), a first block of the polymer is synthesized. During step b), b1), or b2), another block of the polymer is synthesized.

Examples of transfer agents are transfer agents of the following formula (I):

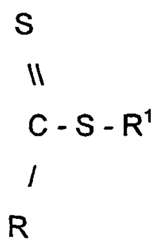

(I)

wherein:

- R represents an $R^2O$-, $R^2R'^2N$- or $R^3$- group, $R^2$ and $R'^2$, which are identical or different, representing (i) an alkyl, acyl, aryl, alkene or alkyne group or (ii) an optionally aromatic, saturated or unsaturated carbonaceous ring or (iii) a saturated or unsaturated heterocycle, it being possible for these groups and rings (i), (ii) and (iii) to be substituted, $R^3$ representing H, Cl, an alkyl, aryl, alkene or alkyne group, an optionally substituted, saturated or unsaturated (hetero)cycle, an alkylthio, alkoxycarbonyl, aryloxycarbonyl, carboxyl, acyloxy, carbamoyl, cyano, dialkyl- or diarylphosphonato, or dialkyl- or diarylphosphinato group, or a polymer chain,
- $R^1$ represents (i) an optionally substituted alkyl, acyl, aryl, alkene or alkyne group or (ii) a carbonaceous ring which is saturated or unsaturated and which is optionally substituted or aromatic or (iii) an optionally substituted, saturated or unsaturated heterocycle or a polymer chain, and

The $R^1$, $R^2$, $R'^2$ and $R^3$ groups can be substituted by substituted phenyl or alkyl groups, substituted aromatic groups or the following groups: oxo, alkoxycarbonyl or aryloxycarbonyl (-COOR), carboxyl (-COOH), acyloxy ($-O_2CR$), carbamoyl ($-CONR_2$), cyano (-CN), alkylcarbonyl, alkylarylcarbonyl, arylcarbonyl, arylalkylcarbonyl, isocyanato, phthalimido, maleimido, succinimido, amidino, guanidino, hydroxyl (-OH), amino ($-NR_2$), halogen, allyl, epoxy, alkoxy (-OR), S-alkyl, S-aryl or silyl, groups exhibiting a hydrophilic or ionic nature, such as alkaline salts of carboxylic acids or alkaline salts of sulphonic acid, poly(alkylene oxide) (PEO, PPO) chains, or cationic substituents (quaternary ammonium salts), R representing an alkyl or aryl group.

Preferably, the transfer agent of formula (I) is a dithiocarbonate chosen from the compounds of following formulae (IA), (IB) and (IC):

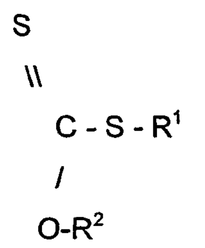 (IA)

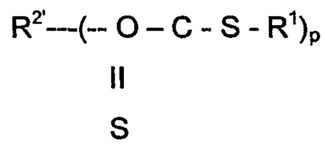 (IB)

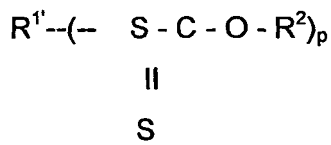 (IC)

wherein:

- $R^2$ and $R^{2'}$ represent (i) an alkyl, acyl, aryl, alkene or alkyne group or (ii) an optionally aromatic, saturated or unsaturated carbonaceous ring or (iii) a saturated or unsaturated heterocycle, it being possible for these groups and rings (i), (ii) and (iii) to be substituted,
- $R^1$ and $R^{1'}$ represent (i) an optionally substituted alkyl, acyl, aryl, alkene or alkyne group or (ii) a carbonaceous ring which is saturated or unsaturated and which is optionally substituted or aromatic or (iii) an optionally substituted, saturated or unsaturated heterocycle or a polymer chain, and
- p is between 2 and 10.

Other examples of transfer agents are transfer agents of the following formulae (II) and (III):

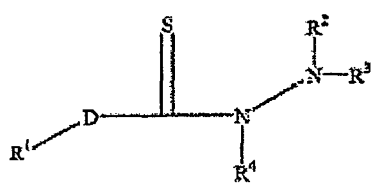 (II)

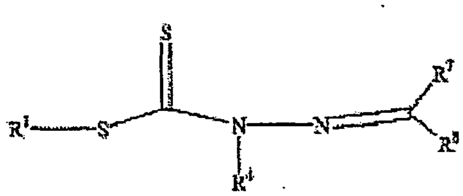 (III)

wherein

- $R^1$ is an organic group, for example a group $R^1$ as defined above for tranfer agents of formulae (I), (IA), (IB), and (IC),

- $R^2$, $R^3$, $R^4$, $R^7$, and $R^8$ which are identical or different are hydrogen atoms or organic groups, optionally forming rings. Examples of $R^2$, $R^3$, $R^4$, $R^7$, and $R^8$ organic groups include hydrocarbyls, subsituted hydrocabyls, heteroatom-containing hydrocarbyls, and substututed heteroatom-containing hydrocarbyls.

The mono-alpha-ethylenically-unsaturated monomers and their proportions are chosen in order to obtain the desire properties for the block(s). According to this process, if all the successive polymerizations are carried out in the same reactor, it is generally preferable for all the monomers used during one stage to have been consumed before the polymerization of the following stage begins, therefore before the new monomers are introduced. However, it may happen that monomers of the preceding stage are still present in the reactor during the polymerization of the following block. In this case, these monomers generally do not represent more than 5 mol% of all the monomers.

The polymerization can be carried out in an aqueous and/or organic solvent medium. The polymerization can also be carried out in a substantially neat melted form (bulk polymerization), or according to a latex type process in an aqueous medium.

Comb copolymers or grafted copolymers can be obtained by copolymerizing or by direct grafting. Direct grafting comprises free-radicals polymerizing the chosen monomer(s) to form the backbone of the final product. If the couple monomer / backbone and the operating conditions are well chosen, then a transfer reaction can occur between a growing macroradical and the backbone. This reaction generates a free radical on the backbone and the graft grows from the free radical. The primary free radical generated from an initiator can as well contribute to transfer reactions.

Processes for preparing star copolymers or microgels are essentially divided in two groups. The first corresponds to forming arms or branches from a compound having several functions constituting the core ("core-first" method, (Kennedy, J.P. and coll. Macromolecules, 29, 8631 (1996), Deffieux, A. and coll. Ibid, 25, 6744, (1992), Gnanou, Y. and coll. Ibid, 31, 6748 (1998)). The second corresponds to first the arms or branches, and then linking them in or on a core to form a star copolymer ("arm-first" method). Such processes are for example described in document WO 00/02939. Other methods include polymerization from a core comprising several transfer groups, and micelles reticulation processes.

<u>Properties - Applications</u>

The copolymer according to the invention is preferably soluble in water. The solubility may depend on the pH of a composition (or formulation), generally a water-based composition, comprising the copolymer. It is preferred that there is a pH range wherein the copolymer is soluble in water. The pH sensibility may be tuned by selecting part A, for example block A, monomers, for example by having in part A, for example block A, units that are potentially anionic or cationic depending on the pH. An example is a part A, for example a block A, having units deriving from acrylic acid or methacrylic acid.

The invention also concerns compositions or formulations comprising the copolymer according to the invention and the use thereof in various compositions or formulations.

The copolymer in compositions of formulations can be in the form of a solution, dispersion, organized system, adsorbed ingredient, optionally located at some interfaces. It can be in the form of vesicles or capsules, or a part thereof.

Interesting formulations include formulations of pharmaceuticals, agrochemicals, home-care formulations, personal-care formulations, and formulations used in industry for preparing other products. Thus the copolymer can be comprised in a pharmaceutical formulation, a home-care formulation, a personal-care formulation, an agricultural formulation, or an industrial composition. Some of these interesting formulations are detailed below.

<u>Agrochemicals formulations or agricultural formulation</u>

The copolymer according to the invention can be used in formulations of agrochemicals, wherein a solid compound is dispersed in water. These formulations include particles, nanoparticles having an average size of lower than 1060 nm, or bigger particles, dispersed in an aqueous medium. In these formulations, the copolymer can be used as a dispersant (dispersing the particles and/or providing stability to the dispersion). The particles may be milled particles of a solid agrochemical. In a very useful process the particles are obtained by a co-precipitation process, where water is added to a composition comprising an agrochemical that is not soluble in water, a solvent of the agrochemical, said solvent being miscible in water, and the copolymer. Details of such a co-precipitation process are provided in international patent application published as WO 02/082900. This application is incorporated by reference.

The copolymer according to the invention can be used in formulations of agrochemicals having a liquid agrochemical to be dispersed as an emulsion is water. In these formulations, the copolymer can be used as an emulsifier, a co-emulsifier, or an emulsifier booster, in order to provide emulsification and/or a good stability of the emulsions. The emulsion formulation can be obtained by a conventional emulsification process by mixing the agrochemical, the water, and the emulsifier(s). According to an advantageous embodiment, the copolymer is used in an auto-emulsifying formulation having the agrochemical, the copolymer and optionally other ingredients. Details of such an auto-emulsifying are provided in international patent application filed on April 11, 2003 as PCT/FR03/01153. This application is incorporated by reference.

Home-care or personal-care formulations or other compositions

The copolymer according to the invention can be used in detergent formulations, especially in dish-washing formulations, and more especially in hand dish-washing formulations. In these formulations the copolymer can modify or help in controlling foam properties. It can help in increasing cleaning and/or preventing re-deposition of fatty substances. More details are provided in international patent application filed on February 11 2003, as PCT/EP03/01317. This application is included by reference.

The copolymer according to the invention can be used as an emulsifier or as a co-emulsifier, or as an agent for controlling the stability of an emulsion, for example in personal-care formulations in the form of a cream, a milk, for example in make-up formulations, or in sun-screen formulations. The emulsions can be direct (oil-in-water), reverse (water-in-oil) or multiple emulsions. More details are provided in international patent application filed on February 11 2003, as PCT/EP03/01313, and in international patent application filed on February 11 2003, as PCT/EP03/01316. These applications are included by reference.

The copolymer according to the invention can be used for suspending and/or dispersing solid particles for example $TiO_2$-based nanoparticles, useful in sun-screen formulations.

The copolymer according to the invention can be used for vectorizing an emulsion onto a surface, or for controlling the deposition of the emulsion onto the surface. This is particularly useful for silicones emulsions, including silicones having an amine group, for example in shampoo or body wash or shower gels formulations (emulsion to be deposited onto the hair or skin as a conditioning agent) , or in laundry detergent formulations (silicone emulsion to be deposited onto a fabric surface).

The copolymer according to the invention can be used in hair and/or skin formulations to be rinsed off or to be left on, such as shampoos, conditioners, shower gels, hair-styling products. The copolymer can provide interesting conditioning and/or hair volume properties, and/or combing (wet combing or dry combing) properties.

The copolymer according the in invention can be used for treating hard surfaces, for example in hard-surface cleaning detergent formulations. It can help in rendering the surface more hydrophilic or hydrophobic. In rendering a surface more hydrophilic it can be used as a water-filming agent.

The copolymer according to the invention can be used for active delivery.

Industrial compositions or uses

The copolymer according to the invention can be used in polymers preparation, for example as an emulsifier, a co-emulsifier, or as an emulsion stabilizer. Accordingly, the copolymer can be used for example in preparing latex polymers, either as a sole emulsifier, as a co-emulsifier combined with surfactant(s), or as an emulsion stabilizer. Examples of useful embodiments include emulsifying monomers or stabilizing an emulsion of monomers to be used for preparing latex. The emulsion of monomers is often referred to as a pre-emulsion. Details of such an emulsification, co-emulsification, or emulsion stabilization are provided in published international patent application WO 02/090392, and in international patent application filed on February 11 2003, as PCT/EP03/01313. These applications are incorporated by reference. Preferred emulsions are emulsions comprising ethylenically unsaturated monomers. The copolymer can also be used for modifying the properties of solid surfaces to achieve a performance different from that of the original surface : such as anti-corrosion, hydrophilization/hydrophobization of surfaces.

Vesicles - capsules

Where the copolymer according to the invention is a block copolymer, wherein part A is a hydrophilic block, and part B is a hydrophobic block, said copolymer may be used for forming vesicles or capsules, said vesicles or capsules having a membrane or a shell having (comprising, essentially consisting of, or consisting of) said copolymer. In other words, it can be used as a membrane or shell, or as a part thereof, of vesicles or capsules.

The vesicles or capsules may be obtained by usual processes, but it has been found that they may be obtained by a very simple new process. The new process has advantages in terms of cost, number of steps, and/or compounds used. The new simple process is described below.

The vesicles are usually dispersed in a medium, preferably an aqueous medium. The vesicles or capsules have a membrane or shell surrounding an internal space, usually comprising a medium, preferably an aqueous medium. Vesicles are usually defined as objects having a membrane surrounding a hydrophilic medium, said membrane having at least two layers of an amphiphilic compound, the hydrophobic moiety of one of the amphiphilic compound of one of

the layer facing the hydrophobic moiety of one of the amphiphilic compound of the other layer. Capsules are usually defined as object having a shell (single layer) surrounding an internal space. However, it is sometimes difficult or useless to determine whether an object is a vesicle or a capsule. The copolymer according to the invention can be used in making vesicles or capsules according to international patent application filed on March 19 2003, as PCT/EP03/02890, or according to international patent application filed on June 6 2003, as PCT/EP03/05995. These applications are incorporated by reference.

The vesicles or capsules preferably comprise an additive ingredient, for example an active ingredient to be protected, vectorized or released with control, a reactive compound to be transformed by a chemical reaction. The additive is preferably a water compatible compound (for example water-dispersible or water-soluble) comprised inside the internal space defined by the membrane or shell, and optionally also outside. Any additive known by the one skilled in the art of vesicles or capsules can be used. The active are to be released in a medium in a controlled way, either by diffusion through the membrane or shell, or by destruction of the membrane or of the shell. It is not excluded that hydrophobic ingredients (for example hydrophobic active) be comprise in the membrane itself or in the shell itself.

Reactive compounds are for example compounds to be polymerized in the droplets of the composition. The vesicles or capsules may be comprised in a composition that may be introduced in an animal or human body, applied onto a surface such as skin, hair, a fabric, a hard surface, or spread in a field. Active ingredients are compounds comprised in the composition to be delivered, quickly or slowly, suddenly, for example by breaking the membrane or the shell, or progressively for example by diffusing through the membrane or the shell, in the destination environment. Thus, the capsules may comprise actives useful in cosmetic compositions, drug compositions, perfumes, agrochemical compositions.

Examples of actives include hydrophilic actives that may be introduced in a classical vesicle, known by the one skilled in the art.

Examples of actives include hydrophilic actives that may be used in cosmetics, including compounds having a cosmetic effect, a therapeutic effect, and compounds used for treating hair or skin.

Thus, active compounds that may be used include hair and skin conditioning agents, such as polymers comprising quaternary ammonium groups, optionally comprised in heterocycles (quaternium or polyquaternium type compounds), moisturizing agents, fixing (styling) agents, more preferably fixing polymers such as homo-, co-, or ter-polymers, for example acrylamide, acrylamide/sodium acrylate, sulfonated polystyrene, cationic polymers, polyvinylpyrrolidone, polyvinyl acetate...

Examples of hydrophilic actives include coloring agents, astringents, that may be used in deodorizing compositions, such as aluminum salts, zirconium salts, antibacterial agents, antiinflammatory agents, anesthetizing agents, solar filter agents...

Examples of actives include hydrophilic actives that may be used in cosmetics, for example α- and β- hydroxyacids, such as citric-acid, lactic acid, glycolic acid, salicylic acid, cicarboxylic acids, preferably unsaturated ones comprising from 9 to 16 carbon atoms, such as azelaic acid, C vitamin and drivatives thereof, particularly phophate-based or glycosyl-based derivatives, biocidal agents, such as preferably cationic ones (for example Glokill PQ, Rhodoaquat RP50, marketed by Rhodia).

Examples of actives include hydrophilic actives that may be used in food industry, for example divalent calcium salts (phosphates, chlorides...), that may be used for cross-linking texturing polymers such as alginates, carraghenans. Sodium bicarbonate may also be used.

Examples of actives include hydrophilic actives that may be used in agrochemicals, including hydrophilic pesticides and pesticides hydrophilic nutritive ingredients.

Examples of actives include hydrophilic actives that may be used in oil fields, including hydrophilic compounds useful for cementing, drilling, or stimulating oil wells (for example par fracturing). Examples include cross-linking catalysts such as lithium salts, chlorides, acetate. Examples also include compounds that degrade polysaccharides, such as carboxylic acids (for example citric acid), enzymes, and oxidizing agents.

Examples of actives include actives that may be used in paper industry, including calcium chloride, and hydrochloric acid.

Examples of actives also include bleaches, to be protected from oxidation by agents in laundry detergent formulations, enzymes, phosphate salts and cationic compounds having a biocide action.

Examples of actives include also cationic surfactants used for fabric care. Capsules make it possible to avoid contact of such surfactants with anionic surfactants usually comprised in laundry detergent formulation, and makes it possible to make two in one formulations having a detergent action and a fabric care action.

Examples of useful actives also include biocides such as:

- Tolcide (Tetrakishydroxymethylphosphonium sulfate, THPS),
- benzyldimethyldodecylammonium chloride (BDAC),
- cetrimonim bromide (CTAB), for example a compound marketed as Rhodaquat M-242.

Examples of useful actives also include enzymes such as serine class proteases, for example elastase.

The vesicles or capsules according to the invention preferably have a copolymer wherein the weight ratio between block B and block A is of higher than or equal to 1/1. For example is can be of about 10/5.

It is noted that for toxicological and bio-compatibility reasons, it might be preferred that transfer groups be chemically removed from the copolymer, if such a group has been used for preparing the copolymer. Useful removing reactions have been described in international patent application filed on February 17 2003, as PCT/EP03/01571, international patent application published as WO02/090397, and international patent application published as WO02/090424. These applications are incorporated by reference.

The vesicles and capsules can be prepared according to a very simple preferred process. Said preferred process comprises the steps of:

- step a) providing a composition comprising water, the copolymer according to the invention, and optionally an additive, wherein the solubility of block A is pH-dependent, the composition having a pH wherein block A is water insoluble, and
- step b) modifying the pH to a pH wherein block A is soluble in water.

Step a) can be carried out for example by mixing water the copolymer in the form of a powder, pH control agents, and optionally the additive.

For example, the process can be carried out with a block copolymer according to the invention wherein block A is a block deriving from acrylic acid, and block B is a block preferably deriving from diethyleneglycolethyletheracrylate or diethyleneglycolethylethermethacrylate, by:

- step a) providing a composition comprising the water, the block copolymer, and optionally an additive, at a pH of lower than 4, and
- step b) raising the pH to above 4.

Some illustrative but non-limiting examples are provided hereunder for a better understanding of the invention.

EXAMPLES

In the examples below, molecular weights of polymers or blocks are indicated in g/mol, at bottom right of said polymers or blocks. For example $A_x b\text{-}B_y$ is a (block A)-(block B) di-block copolymer wherein block A has a molecular weight of x and block B has a molecular weight of y.

Example 1 (comparative): Synthesis of a homo-polymer $p(DEGA)_{3000}$

| Ingredients: | |
|---|---|
| Ethanol | 32.00 g. |
| Di ethylene glycol ethyl ether acrylate | 50.00 g. |
| Xanthate A | 1.041 g. |
| AIBN | 0.280 g. |

Procedure :

The above ingredients are charged into a 250-ml polymerization bottle with a mechanic stirrer. After sealing the cap with the rubber septum, the contents are bubbled through dry nitrogen for 60 minutes, then heated to 70˚C and held at this temperature for 8 hours. Small amount of sample is withdrawn to check the conversion by gas chromatography head-space. At the end, the solid content is 20%.

Example 2: Synthesis of a di-block copolymer $p(DEGA)_{3000}$-b- $p(AA)_{12000}$ (poly diethylene glycol ethyl ether acrylate block poly acrylic acid)

Stage 1: Synthesis of a Monoblock $p(DEGA)_{3000}$

| Ingredients: | |
|---|---|
| Ethanol | 32.00 g. |
| Di ethylene glycol ethyl ether acrylate | 30.00 g. |
| Xanthate A | 0.384 g. |
| AMBN | 0.263 g. |

Procedure :

The above ingredients are charged into a 500-ml polymerization bottle with a mechanic stirrer. After sealing the cap with the rubber septum, the contents are bubbled through dry nitrogen for 60 minutes, then heated to 70˚C and held at this temperature for 8 hours. Small amount of sample is withdrawn to check the conversion. The solid content is 50%.

Stage 2: Synthesis of a di-block copolymer $p(DEGA)_{3000}$-b-$p(AA)_{12000}$

| Ingredients: | |
|---|---|
| Ethanol | 225.0 g. |
| Acrylic Acid | 120.0 g. |
| AMBN | 0.263 g. |

Procedure:

The above ingredients are charged into a dry flask and bubbled through dry nitrogen for 60 minutes. Then, they are transferred into the polymerization bottle of stage 1 by a double-tipped needle. After the introduction of the feed is completed, the reaction mixture is held at 70˚C for another 8 hours. The conversion is checked by the solid content. The solid content is 50%.

Example 3: Synthesis of di-block copolymer [p(DEGA)-s-$p(BA)_{3000}$-b- $p(AA)_{12000}$ ([poly diethylene glycol ethyl ether acrylate statistic poly butyl acrylate] block polyacrylic acid)

Stage 1: Synthesis of a statistic Monoblock $p(DEGA)_{2250}$-s-$p(BA)_{750}$

| Ingredients: | |
|---|---|
| Ethanol | 10.51 mL. |
| Di ethylene glycol ethyl ether acrylate | 4.054 mL. |
| BA butyl acrylate | 1.311 mL |
| Xanthate A | 0.308 mL. |
| Trigonox | 0.061 g. |

Procedure :

The above ingredients are charged into a 100-ml polymerization bottle with a mechanic stirrer. After sealing the cap with the rubber septum, the contents are bubbled through dry nitrogen for 60 minutes, then heated to 70˚C and

held at this temperature for 10 hours. The initiator is added by shoots (5 additions). Small amount of sample is withdrawn to check the conversion of both monomers. The solid content is 50%.

Stage 2: Synthesis of a di-block copolymer $[p(DEGA)\text{-}s\text{-}p(BA)]_{3000}\text{-}b\text{-}p(AA)_{12000}$

| Ingredients: | |
|---|---|
| Ethanol | 35.00 mL. |
| Acrylic Acid | 20.06 mL. |
| Trigonox | 0.0612 g. |

Procedure:

The above ingredients are charged into a dry flask and bubbled through dry nitrogen for 60 minutes. Then, they are transferred into the polymerization bottle of stage 1 by a double-tipped needle. After the introduction of the feed is completed, the reaction mixture is held at 70˚C for another 10 hours. The conversion is checked by the solid content. The solid content is 50%.

Example 4: Synthesis of a di-block copolymer $p(nEGA)_{30000}\text{-}b\text{-}\ p\ (TMAEAMS)_{11000}$ (poly nonethylene glycol methyl ether acrylate block poly{[2-(acrvloxy)ethyl] trimethylammonium methyl sulfate})

Stage 1: Synthesis of a Monoblock $p(nEGA)_{30000}$

| Ingredients: | |
|---|---|
| Ethanol | 30.0 g. |
| Water | 130.0 g. |
| Nonethylene glycol methyl ether acrylate | 165.0 g. |
| Xanthate A | 1.145 g. |
| $S_2O_8(NH_4)_2$ | 0.250 g. |

Procedure :

The above ingredients are charged into a 500-ml polymerization bottle with a mechanic stirrer. After sealing the cap with the rubber septum, the contents are bubbled through dry nitrogen for 60 minutes, then heated to 70˚C and held at this temperature for 8 hours. Small amount of sample is withdrawn to check the conversion. The solid content is 50%.

Stage 2: Synthesis of a di-block copolymer $p(nEGA)_{30000}\text{-}b\text{-}p(TMAEAMS)_{11000}$

| Ingredients: | |
|---|---|
| Ethanol | 12.0 g. |
| Water | 46.0 g. |
| [2-(acryloxy)ethyl] trimethylammonium methyl sulfate | 60.0 g |
| $S_2O_8(NH_4)_2$ | 0.250 g. |

Procedure:

The above ingredients are charged into a dry flask and bubbled through dry nitrogen for 60 minutes. Then, they are transferred into the polymerization bottle of stage 1 by a double-tipped needle. After the introduction of the feed

is completed, the reaction mixture is held at 70˚C for another 14 hours. The conversion is checked by the solid content. The solid content is 50%.

Example 5 (comparative) Synthesis of a di-block copolymer $p(AM)_{30000}$-b- p $(TMAEAMS)_{11000}$ (poly acrylamide block poly{[2-(acrvloxy)ethyl] trimethylammonium methyl sulfate })

Stage 1: Synthesis of a Monoblock $p(TMAEAMS)_{11000}$

| Ingredients: | |
|---|---|
| Ethanol | 30.0 g. |
| Water | 130.0 g. |
| [2-(acryloxy)ethyl] trimethylammonium methyl sulfate | 60.0 g. |
| Xanthate A | 1.145 g. |
| $S_2O_8(NH_4)_2$ | 0.250 g. |

Procedure :

The above ingredients are charged into a 500-ml polymerization bottle with a mechanic stirrer. After sealing the cap with the rubber septum, the contents are bubbled through dry nitrogen for 60 minutes, then heated to 70˚C and held at this temperature for 8 hours. Small amount of sample is withdrawn to check the conversion. The solid content is 50%.

Stage 2: Synthesis of a di-block copolymer $p(AM)_{30000}$-b-$p(TMAEAMS)_{11000}$

| Ingredients: | |
|---|---|
| Ethanol | 12.0 g. |
| Water | 46.0 g. |
| Acrylamide | 165.0 g. |
| $S_2O_8(NH_4)_2$ | 0.250 g. |

Procedure:

The above ingredients are charged into a dry flask and bubbled through dry nitrogen for 60 minutes. Then, they are transferred into the polymerization bottle of stage 1 by a double-tipped needle. After the introduction of the feed is completed, the reaction mixture is held at 70˚C for another 14 hours. The conversion is checked by the solid content. The solid content is 50%.

Example 6 (comparative) Synthesis of a diblock copolymer $pBA_{3000}$-$pAA_{12000}$ (poly butylacrylate block poly acrylic acid)

Stage 1: Synthesis of a Monoblock $p(BA)_{3000}$

| Ingredients: | |
|---|---|
| Ethanol | 32.00 g. |
| Butyl acrylate | 30.00 g. |
| Xanthate A | 0.384 g. |
| AMBN | 0.263 g. |

Procedure :

The above ingredients are charged into a 500-ml polymerization bottle with a mechanic stirrer. After sealing the cap with the rubber septum, the contents are bubbled through dry nitrogen for 60 minutes, then heated to 70˚C and held at this temperature for 8 hours. Small amount of sample is withdrawn to check the conversion. The solid content is 50%.

Stage 2: Synthesis of a di-block copolymer $p(BA)_{3000}$-b-$p(AA)_{12000}$

| Ingredients: | |
|---|---|
| Ethanol | 225.0 g. |
| Acrylic Acid | 120.0 g. |
| AMBN | 0.263 g. |

Procedure:

The above ingredients are charged into a dry flask and bubbled through dry nitrogen for 60 minutes. Then, they are transferred into the polymerization bottle of stage 1 by a double-tipped needle. After the introduction of the feed is completed, the reaction mixture is held at 70˚C for another 8 hours. The conversion is checked by the solid content. The solid content is 50%.

Example 7 : Emulsifier test

In order to compare the properties of diblock copolymers as emulsifiers (liquid/liquid interface), a pendant drop experiment is used. One can compare the kinetics and the final surface pressure. In this experiment, a syringe full of air is introduced in a cell full of a polymer solution (concentration from 0.1 % to $10^{-6}$%). Pushing on the syringe, one creates a new interface between the water and the solution. The shape of the bubble depends on the surface tension and the density of the fluid, which are known. Using a CCD camera and a software one can monitor the surface tension versus the life time of the interface. The better the kinetics is, the better the emulsifier is. The higher the surface pressure is, the better the emulsifier is.
The kinetics and the surface pressure of two diblock copolymers, $pBA_{3000}$-b-$pAA_{12000}$ of example 6 and $pDEGA_{3000}$-b-$PAA_{12000}$ of example 2, are compared. $pDEGA_{3000}$-b-$PAA_{12000}$ copolymer has kinetics 1000 times faster than $pBA_{3000}$-b-$pAA_{12000}$. $pBA_{3000}$-b-$PAA_{12000}$ copolymer solution has a surface pressure at equilibrium of around 25 mN/m, whereas $pDEGA_{3000}$-b-$PAA_{12000}$ copolymer solution has a surface pressure at equilibrium of around 33mN/m, which is comparable to the surface pressure of a surfactant after the critical micellar concentration (Sodium Dodecyl sulfate for example).

Example 8 : adsorption on hydrophobic surfaces test.

Reflectometry on hydrophobic model surfaces (silicon wafer with 1000Å of silice is silanized with Hexamethyldisilazane) is carried out. The hydrophobic surface is immerged in a cell where polymers solutions flow. Using the change of polarization of a laser beam reflected on the surface, the adsorbed amount of polymer on the surface is monitored.
The adsorbed amount and the kinetics of adsorption are measured for different diblock copolymers.
The copolymers tested are the following:

- $pBA_{3000}$-b-$pAA_{12000}$ of example 6
- $[p(DEGA)$-s-$p(BA)]_{3000}$-b-$p(AA)_{12000}$ of example 3
- $pDEGA_{3000}$-b-$PAA_{12000}$ of example 2

The test shows that:

- $[p(DEGA)$-s-$p(BA)]_{3000}$-b-$p(AA)_{12000}$ of example 3 and $pDEGA_{3000}$-b-$PAA_{12000}$ of example 2 have a better adsorption amounts than $pBA_{3000}$-b-$pAA_{12000}$ of example 6,
- $[p(DEGA)$-s-$p(BA)]_{3000}$-b-$p(AA)_{12000}$ of example 3 and $pDEGA_{3000}$-b-$PAA_{12000}$ of example 2 have close kinetics of

adsorption, and

- $[p(DEGA)\text{-}s\text{-}p(BA)]_{3000}\text{-}b\text{-}p(AA)_{12000}$ of example 3 reaches an higher adsorbed amount than $pDEGA_{3000}\text{-}b\text{-}PAA_{12000}$.

Example 9: hair volume test

Materials & Methods

- Medium brown fine hair tresses 6 inches long x 1 inch wide x 2 gm in weight.
- 15% (basis active) Rhodapon LSB solution, a surfactant marketed by Rhodia.
- Aqueous polymer test solutions containing 5.0% polymer basis active.
- Polymers tested:
    - $p(nEGA)_{3000}\text{-}b\text{-}p(TMAEAMS)_{11000}$ of example 5
    - $p(AM)_{30000}\text{-}b\text{-}p(TMAEAMS)_{11000}$ (poly acrylamide block poly{[2-(acryloxy)ethyl] trimethylammonium}) of example 4
- Image-Pro digital image analyzer
- Minolta Dilmage 7i high resolution digital camera

Twenty-one tresses are labeled and divided into seven treatment groups (3 tresses / treatment group). Each of the tresses are pre-cleansed by immersing in a 15% solution of Rhodapon LSB for 10 minutes accompanied by physical agitation for one minute. The tresses are then rinsed for 45 minutes under running tap water (25˚C) and allowed to air dry overnight at room temperature. Multiple high resolution baseline color photos are then taken of each tress. Each image is then transferred to the digital image analyzer for baseline volume measurements. Subsequent to the baseline analysis each tress is moistened under running water (40˚ C) for one minute. 0.2 ml of the respective polymer solution is then applied and massaged into the hair for one minute followed by a one minute rinse under running tap water (40˚ C). The tresses are then allowed to air dry overnight at room temperature and a second set of digital post-treatment images are taken and analyzed.
The pre and post-treatment images are then analyzed by the Image-Pro digital image analyzer. This software measures the area (corresponding to the surface of the front of the tress' picture) and the diameter (corresponding to the thickness of the side tress' picture). With these 2 parameters, the volume is determined. The increasing of volume is determined by the difference of the values of the volume of the post-treated tresses and the pre-treated tresses.

Results

This test shows that $p(nEGA)_{30000}\text{-}b\text{-}p(TMAEAMS)_{11000}$ of example 4 provides better volume increase (+ 9.4% volume) than $p(AM)_{30000}\text{-}b\text{-}p(TMAEAMS)_{11000}$ of example 5 (+ 0.1% volume).

## Claims

1. A copolymer having a controlled structure, comprising at least two parts, part A and part B, said parts having different compositions, wherein:

    - part A is a hydrophilic or hydrophobic part, and
    - part B is a part comprising units deriving from a monomer B having the following formula:

$$CH_2{=}CR^1CO\text{-}[O\text{-}(CH_2)_p\text{-}]_nOR^2 \text{ or } CH_2{=}CR^1CO\text{-}[O\text{-}CH_{2\text{-}a}(CH_3)_a\text{- }CH_{2\text{-}b}(CH_3)_b\text{-}]_nOR^2$$

    wherein:

        - $R^1$ is hydrogen or a methyl group,
        - p, which is identical or different, is 2 or 3,
        - a, which is identical or different, is 0 or 1,
        - b, which is identical or different, is 0 or 1,

- a+b = 0 or 1,
- p = 2+a+b,
- n is an average number being greater than or equal to 1, and
- $R^2$ is an alkyl group.

**2.** A copolymer according to claim 1, wherein it has one the following structures:

- block copolymer comprising at least two blocks, part A corresponding to one block, part B corresponding to another block, part A having optionally a composition gradient,
- comb copolymer or grafted copolymer, having a skeleton and side chains, with part A corresponding to the backbone and part B corresponding to side chains, or with part B corresponding to the backbone and part A corresponding to side chains,
- star copolymer or microgel copolymer or gelled micelle copolymer, comprising a polymeric core or non polymeric core, and peripheral polymeric chains, one part A or B corresponding to the core, and the other part corresponding to peripheral polymeric chains.

**3.** A copolymer according to one of the preceding claims, wherein it is a (block A)-(block B) diblock copolymer, a (block A)-(block B)-(block A) triblock copolymer, or a (block B)-(block A)-(block B) triblock copolymer.

**4.** A copolymer according to one of the preceding claims, wherein part A is a hydrophilic part, and part B is a hydrophobic part.

**5.** A copolymer according to one of the preceding claims, wherein:

- p is 2
- n is greater than or equal to 2, and
- $R^2$ is a methyl group or an ethyl group.

**6.** A copolymer according to claim 1, wherein:

- part A is a hydrophilic part,
- part B is a hydrophobic part, and
- monomer B is diethyleneglycolethyletheracrylate or diethyleneglycolethylethermethacrylate.

**7.** A copolymer according to one of claims 1 to 3 and 5, wherein monomer B is nonethyleneglycolmethyletheracrylate or nonethyleneglycolmethylethermethacrylate.

**8.** A copolymer according to one of a preceding claims; wherein part A comprises units deriving from mono-alpha-ethylenically-unsaturated monomers.

**9.** A copolymer according to one preceding claims, wherein block B further comprises units deriving from a hydrophobic or a hydrophilic monomer.

**10.** A copolymer according to the preceding claim, the hydrophobic monomer is selected from the group consisting of:

- alkylesters of an alpha-ethylenically-unsaturated, preferably mono-alpha-ethylenically-unsaturated, monocarboxylic acid, such as methylacrylate, ethylacrylate, n-propylacrylate, n-butylacrylate, methylmethacrylate, ethylmethacrylate, n-propylmethacrylate, n-butylmethacrylate, and 2-ethyl-hexyl acrylate, 2-ethyl-hexyl methacrylate, isooctyl acrylate, isooctyl methacrylate, lauryl acrylate, lauryl methacrylate,
- vinyl Versatate,
- acrylonitrile,
- vinyl nitriles, comprising from 3 to 12 carbon atoms,
- vinylamine amides, and
- vinylaromatic compounds such as styrene.

**11.** A block copolymer according to one of the preceding claims, wherein part A is a neutral, anionic or cationic part.

**12.** A block copolymer according to one of the preceding claims, wherein part A comprises units deriving from a monomer

selected from the group consisting of:

- ethylene oxide,
- vinyl alcohol,
- vinyl pyrrolidone,
- acrylamide, methacrylamide,
- polyethylene oxide (meth)acrylate (i.e. polyethoxylated (meth)acrylic acid),
- hydroxyalkylesters of alpha-ethylenically-unsaturated, preferably mono-alpha-ethylenically-unsaturated, monocarboxylic acids, such as 2-hydroxyethylacrylate, and
- hydroxyalkylamides of alpha-ethylenically-unsaturated, preferably mono-alpha-ethylenically-unsaturated, monocarboxylic acids,
- dimethylaminoethyl (meth)acrylate, dimethylaminopropyl (meth)acrylate, ditertiobutylaminoethyl (meth)acrylate, dimethylaminomethyl (meth)acrylamide, dimethylaminopropyl (meth)acrylamide;
- ethylenimine, vinylamine, 2-vinylpyridine, 4- vinylpyridine;
- trimethylammonium ethyl (meth)acrylate chloride, trimethylammonium ethyl (meth)acrylate methyl sulphate, dimethylammonium ethyl (meth)acrylate benzyl chloride, 4-benzoylbenzyl dimethylammonium ethyl acrylate chloride, trimethyl ammonium ethyl (meth)acrylamido (also called 2-(acryloxy)ethyltrimethylammonium, TMAEAMS) chloride, trimethylammonium ethyl (meth)acrylate (also called 2-(acryloxy)ethyltrimethylammonium, TMAEAMS) methyl sulphate, trimethyl ammonium propyl (meth)acrylamido chloride, vinylbenzyl trimethyl ammonium chloride,
- diallyldimethyl ammonium chloride,
- alpha-ethylenically-unsaturated, preferably mono-alpha-ethylenically-unsaturated, monomers comprising a phosphate or phosphonate group,
- alpha-ethylenically-unsaturated, preferably mono-alpha-ethylenically-unsaturated, monocarboxylic acids, such as acrylic acid, methacrylic acid
- monoalkylesters of alpha-ethylenically-unsaturated, preferably mono-alpha-ethylenically-unsaturated, dicarboxylic acids,
- monoalkylamides of alpha-ethylenically-unsaturated, preferably mono-alpha-ethylenically-unsaturated, dicarboxylic acids,
- alpha-ethylenically-unsaturated, preferably mono-alpha-ethylenically-unsaturated, compounds comprising a sulphonic acid group, and salts of alpha-ethylenically-unsaturated, preferably mono-alpha-ethylenically-unsaturated, compounds comprising a sulphonic acid group, such as vinyl sulphonic acid, salts of vinyl sulfonic acid, vinylbenzene sulphonic acid, salts of vinylbenzene sulphonic acid, alpha-acrylamidomethylpropanesulphonic acid, salts of alpha-acrylamidomethylpropanesulphonic acid 2-sulphoethyl methacrylate, salts of 2-sulphoethyl methacrylate, acrylamido-2-methylpropanesulphonic acid (AMPS), salts of acrylamido-2-methylpropanesulphonic acid, and styrenesulfonate (SS),
- monomers having the following formula:

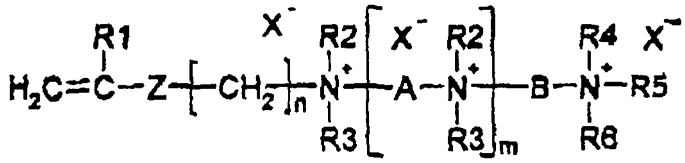

wherein

- $R_1$ is a hydrogen atom or a methyl or ethyl group;
- $R_2$, $R_3$, $R_4$, $R_5$ and $R_6$, which are identical or different, are linear or branched $C_1$-$C_6$, preferably $C_1$-$C_4$, alkyl, hydroxyalkyl or aminoalkyl groups;
- m is an integer from 1 to 10, for example 1;
- n is an integer from 1 to 6, preferably 2 to 4;
- Z represents a -C(O)O- or -C(O)NH- group or an oxygen atom;
- A represents a $(CH_2)_p$ group, p being an integer from 1 to 6, preferably from 2 to 4;
- B represents a linear or branched $C_2$-$C_{12}$, advantageously $C_3$-$C_6$, polymethylene chain optionally interrupted by one or more heteroatoms or heterogroups, in particular O or NH, and optionally substituted by one or more hydroxyl or amino groups, preferably hydroxyl groups;

- X, which are identical or different, represent counterions, and

- their mixtures, and macromonomers deriving therefrom.

**13.** A copolymer according to one of the preceding claims, being soluble in water.

**14.** A copolymer according to one of the preceding claims, wherein the weight ratio between part B and part A is of higher than 1/1.

**15.** A copolymer according to one of claims 1 to 13, wherein the weight ratio between part B and part A is of lower than or equal to 1/1.

**16.** A copolymer according to one of the preceding claims, comprised in a pharmaceutical formulation, a home-care formulation, a personal care formulation, an agricultural formulation, or an industrial composition.

**17.** Use of the copolymer according to one of claims 1 to 15

- as an emulsifier or co-emulsifier,
- as a dispersant of solid particles,
- as an agent for treating surfaces, or
- where said copolymer is a block copolymer, wherein part A is a hydrophilic block, and part B is a hydrophobic block, as a membrane or shell, or as a part thereof, of vesicles or capsules.

## Patentansprüche

**1.** Copolymer mit einer regulierten Struktur, umfassend mindestens zwei Teile, Teil A und Teil B, wobei die Teile unterschiedliche Zusammensetzungen aufweisen, wobei:

- Teil A ein hydrophiler oder hydrophober Teil ist, und
- Teil B ein Teil ist, welcher Einheiten umfasst, die von einem Monomer B mit der folgenden Formel abgeleitet sind:

$$CH_2{=}CR^1CO\text{-}[O\text{-}(CH_2)_p\text{-}]_nOR^2 \text{ oder } CH_2{=}CR^1CO\text{-}[O\text{-}CH_{2\text{-}a}(CH_3)_a\text{-}\ CH_{2\text{-}b}(CH_3)_b\text{-}]_nOR^2$$

worin:

- $R^1$ Wasserstoff oder eine Methylgruppe ist,
- p, welches identisch oder unterschiedlich ist, 2 oder 3 ist,
- a, welches identisch oder unterschiedlich ist, 0 oder 1 ist,
- b, welches identisch oder unterschiedlich ist, 0 oder 1 ist,
- $a + b = 0$ oder 1,
- $p = 2 + a + b$,
- n eine durchschnittliche Zahl ist, die größer oder gleich 1 ist, und
- $R^2$ eine Alkylgruppe ist.

**2.** Copolymer gemäß Anspruch 1, wobei es eine der folgenden Strukturen aufweist:

- Blockcopolymer, umfassend mindestens zwei Blöcke, Teil A, welcher einem Block entspricht, Teil B, welcher einem anderen Block entspricht, wobei Teil A gegebenenfalls einen Zusammensetzungsgradienten aufweist,
- Kamm-Copolymer oder gepfropftes Copolymer mit einem Gerüst und Seitenketten, mit Teil A, welcher dem Grundgerüst entspricht, und Teil B, welcher Seitenketten entspricht, oder mit Teil B, welcher dem Grundgerüst entspricht, und Teil A, welcher Seitenketten entspricht,
- Sterncopolymer oder Microgel-Copolymer oder geliertes Mizellen-Copolymer, umfassend einen polymeren Kern oder nicht-polymeren Kern, und periphere polymere Ketten, wobei ein Teil A oder B dem Kern entspricht und der andere Teil peripheren polymeren Ketten entspricht.

**3.** Copolymer gemäß mindestens einem der vorhergehenden Ansprüche, wobei es ein (Block A) - (Block B) - Diblock-Copolymer, ein (Block A) - (Block B) - (Block A) - Triblock-Copolymer oder ein (Block B) - (Block A) - (Block B) -

Triblock-Copolymer ist.

4. Copolymer gemäß mindestens einem der vorhergehenden Ansprüche, wobei Teil A ein hydrophiler Teil ist und Teil B ein hydrophober Teil ist.

5. Copolymer gemäß mindestens einem der vorhergehenden Ansprüche, wobei:

- p 2 ist
- n größer oder gleich 2 ist und
- $R^2$ eine Methylgruppe oder eine Ethylgruppe ist.

6. Copolymer gemäß Anspruch 1, wobei:

- Teil A ein hydrophiler Teil ist,
- Teil B ein hydrophober Teil ist und
- Monomer B Diethylenglycolethyletheracrylat oder Diethylenglycolethylethermethacrylat ist.

7. Copolymer gemäß mindestens einem der Ansprüche 1 bis 3 und 5, wobei das Monomer B Non- bzw. Nichtethylenglycolmethyletheracrylat oder Nonethylenglycolmethylethermethacrylat ist.

8. Copolymer gemäß mindestens einem der vorhergehenden Ansprüche, wobei Teil A Einheiten umfasst, die von mono-alpha-ethylenisch ungesättigten Monomeren abgeleitet sind.

9. Copolymer gemäß mindestens einem der vorhergehenden Ansprüche, wobei der Block B ferner Einheiten umfasst, die von einem hydrophoben oder einem hydrophilen Monomer abgeleitet sind.

10. Copolymer gemäß dem vorhergehenden Anspruch, wobei das hydrophobe Monomer aus der Gruppe gewählt ist, welche aus folgenden besteht:

- Alkylestern einer alpha-ethylenisch ungesättigten, vorzugsweise mono-alpha-ethylenisch ungesättigten Monocarbonsäure, wie Methylacrylat, Ethylacrylat, n-Propylacrylat, n-Butylacrylat, Methylmethacrylat, Ethylmethacrylat, n-Propylmethacrylat, n-Butylmethacrylat und 2-Ethylhexylacrylat, 2-Ethyl-hexylmethacrylat, Isooctylacrylat, Isooctylmethacrylat, Laurylacrylat, Laurylmethacrylat,
- Vinylversatat,
- Acrylnitril,
- Vinylnitrilen, umfassend 3 bis 12 Kohlenstoffatome,
- Vinylaminamiden und
- vinylaromatischen Verbindungen wie Styrol.

11. Blockcopolymer gemäß mindestens einem der vorhergehenden Ansprüche, wobei Teil A ein neutraler, anionischer oder kationischer Teil ist.

12. Blockcopolymer gemäß einem der vorhergehenden Ansprüche, wobei Teil A Einheiten umfasst, die von einem Monomer abgeleitet sind, welches aus der Gruppe gewählt wird, die aus folgenden besteht:

- Ethylenoxid,
- Vinylalkohol,
- Vinylpyrrolidon,
- Acrylamind, Methacrylamid,
- Polyethylenoxid(meth)acrylat(d. H. Polyethoxylierte (Meth)acrylsäure),
- Hydroxyalkylestern von alpha-ethylenisch ungesättigten, vorzugsweise mono-alpha-ethylenisch ungesättigten Monocarbonsäuren, wie 2-Hydroxyethylacrylat, und
- Hydroxyalkylamiden von alpha-ethylenisch ungesättigten, vorzugsweise mono-alpha-ethylenisch ungesättigten Monocarbonsäuren,
- Dimethylaminoethyl(meth)acrylat, Dimethylaminopropyl(meth)acrylat, Ditertiobutylaminoethyl(meth)acrylat, Dimethylaminomethyl(meth)acrylamind, Dimethylaminopropyl(meth)-acrylamid;
- Ethylenimin, Vinylamin, 2-Vinylpyridin, 4-Vinylpyridin;
- Trimethylammoniumethyl(meth)acrylatchlorid, Trimethylammoniumethyl(meth)acrylatmethyl-sulfat, Dimethylammoniumethyl(meth)acrylatbenzylchlorid, 4-Benzoylbenzyldimethylammoniumethylacrylatchlorid, Trimethylammoniumethyl(meth)acrylamido (ebenfalls bezeichnet als 2-(Acryloxy)ethyltrimethylammonium, TMAEAMS)-chlorid, Trimethylammonium-ethyl(meth)acrylat (ebenfalls bezeichnet als 2-(Acryloxy)ethyltrimethylammonium, TMAEAMS)-methylsulfat, Trimethylammoniumpropyl(meth)acrylamidochlorid, Vinylbenzyltrimethylammoniumchlorid,
- Diallyldimethylammoniumchlorid,
- alpha-ethylenisch ungesättigte, vorzugsweise mono-alpha-ethylenisch ungesättigte Monomere, die eine Phosphat- oder Phosphonatgruppe umfassen,
- alpha-ethylenisch ungesättigte, vorzugsweise mono-alpha-ethylenisch ungesättigte Monocarbonsäuren, wie Acrylsäure, Methacrylsäure,
- Monoalkylester von alpha-ethylenisch ungesättigten, vorzugsweise mono-alpha-ethylenisch ungesättigten Dicarbonsäuren,
- Monoalkylamide von alpha-ethylenisch ungesättigten, vorzugsweise mono-alpha-ethylenisch ungesättigten Dicarbonsäuren,
- alpha-ethylenisch ungesättigten, vorzugsweise mono-alpha-ethylenisch ungesättigten Verbindungen, die eine Sulfonsäuregruppe umfassen, und Salze von alpha-ethylenisch ungesättigten, vorzugsweise mono-alpha-ethylenisch ungesättigten Verbindungen, die eine Sulfonsäuregruppe umfassen, wie Vinylsulfonsäure, Salze von Vinylsulfonsäure, Vinylbenzolsulfonsäure, Salze von Vinylbenzolsulfonsäure, alpha-Acrylamidomethylpropansulfonsäure, Salze von alpha-Acrylamidomethylpropansulfonsäure-2-sulfoethylmethacrylat, Salze von 2-Sulfoethylmethacrylat, Acrylamido-2-methylpropansulfonsäure (AMPS), Salze von Acrylamido-2-methylpropansulfon-säure und Styrolsulfonat (SS),
- Monomere mit der folgenden Formel:

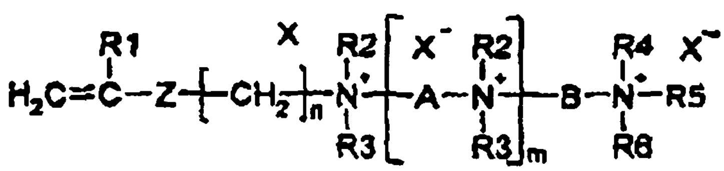

worin

- $R_1$ ein Wasserstoffatom oder eine Methyl- oder Ethylgruppe ist;
- $R_2$, $R_3$, $R_4$, $R_5$ und $R_6$, welche identisch oder unterschiedlich sind, lineare oder verzweigte $C_1$-$C_6$, vorzugsweise $C_1$ - $C_4$, -Alkyl-, -Hydroxyalkyl- oder -Aminoalkylgruppen sind;
- m eine ganze Zahl von 1 bis 10, zum Beispiel 1, ist;
- n eine ganze Zahl von 1 bis 6, vorzugsweise 2 bis 4, ist;
- z für eine -C(O)O- oder -C(O)NH-Gruppe oder ein Sauerstoffatom steht;
- A für eine $(CH_2)_p$-Gruppe steht, wobei p eine ganze Zahl von 1 bis 6, vorzugsweise von 2 bis 4, ist;
- B für eine lineare oder verzweigte $C_2$ - $C_{12}$ -, vorteilhafterweise $C_3$ - $C_6$ -Polymethylenkette steht, die gegebenenfalls durch ein oder mehrere Heteroatome oder Heterogruppen, insbesondere O oder NH, unterbrochen ist und gegebenenfalls durch eine oder mehrere Hydroxyl- oder Aminogruppen, vorzugsweise Hydroxylgruppen, substituiert ist;
- X, welches identisch oder unterschiedlich ist, für Gegenionen steht, und
- ihre Mischungen und Makromonomere, die daraus abgeleitet sind.

**13.** Copolymer gemäß einem der vorhergehenden Ansprüche, welches in Wasser löslich ist.

**14.** Copolymer gemäß einem der vorhergehenden Ansprüche, wobei das Gewichtsverhältnis zwischen Teil B und Teil A höher als 1/1 ist.

**15.** Copolymer gemäß einem der Ansprüche 1 bis 13, wobei das Gewichtsverhältnis zwischen Teil B und Teil A niedriger als oder gleich 1/1 ist.

**16.** Copolymer gemäß einem der vorhergehenden Ansprüche, das in einer pharmazeutischen Formulierung, einer Hauspflegeformulierung, einer Formulierung für die persönliche Pflege, einer Landwirtschaftsformulierung oder einer industriellen Zusammensetzung vorliegt.

**17.** Verwendung des Copolymeren gemäß einem der Ansprüche 1 bis 15

- als ein Emulgiermittel oder Co-Emulgiermittel,
- als ein Dispergiermittel von festen Teilchen,
- als ein Mittel zur Behandlung von Oberflächen oder
- wobei das Copolymer ein Blockcopolymer ist, wobei Teil A ein hydrophiler Block ist und Teil B ein hydrophober Block ist, als eine Membran oder Hülle, oder als ein Teil davon, von Vesikeln oder Kapseln.

## Revendications

**1.** Copolymère à structure contrôlée, comprenant au moins deux parties, une partie A et une partie B, lesdites parties ayant des compositions différentes, **caractérisé en ce que:**

- la partie A est une partie hydrophile ou hydrophobe, et
- la partie B est une partie comprenant des unités dérivant d'un monomère B de formule suivante:

$$CH_2=CR^1CO-[O-(CH_2)_p-]_nOR^2 \text{ or } CH_2=CR^1CO-[O-CH_{2-a}(CH_3)_a- CH_{2-b}(CH_3)_b-]_nOR^2$$

où:

- $R^1$ est l'hydrogène ou un groupe méthyle,
- p, identique ou différent, est 2 ou 3,
- a, identique ou différent, est 0 ou 1,
- b, identique ou différent, est 0 ou 1,
- a+b = 0 ou 1,
- p = 2+a+b,
- n est un nombre moyen supérieur ou égal à 1, et
- $R^2$ est un groupe alkyle.

**2.** Copolymère selon la revendication 1, **caractérisé en ce qu'**il a une des structures suivantes:

- copolymère à blocs comprenant au moins deux blocs, la partie A correspondant à un bloc, la partie B correspondant à l'autre bloc, la partie A ayant éventuellement un gradient de composition,
- copolymère peigne ou greffé, ayant un squelette et des chaines latérales, avec la partie A correspondent au squelette et la partie B correspondant aux chaines latérales, ou avec la partie B correspondant au squelette et la partie A correspondant aux chaines latérales,
- copolymère étoile ou copolymère microgel ou copolymère à micelles gelées, comprenant un coeur polymérique ou non polymérique, and des chaines polymériques périphériques, une partie A

ou B correspondant au coeur, et l'autre partie correspondant aux chaines polymériques périphériques.

**3.** Copolymère selon l'une des revendications précédentes, **caractérisé en ce que** c'est un copolymère dibloc (bloc A)-(bloc B), un copolymère tribloc (bloc A)-(bloc B)-(bloc A), ou un copolymère tribloc (bloc B)-(bloc A)-(bloc B).

**4.** Copolymère selon l'une des revendications précédentes, **caractérisé en ce que** la partie A est une partie hydrophile, et la partie B est une partie hydrophobe.

**5.** Copolymère selon l'une des revendications précédentes, **caractérisé en ce que**:

- pest2
- n est supérieur ou égale à 2, et
- $R^2$ est un groupe méthyle ou éthyle.

**6.** Copolymère selon la revendication 1, **caractérisé en ce que:**

- la partie A est une partie hydrophile,

- la partie B est une partie hydrophobe, et
- le monomère B est le diéthylèneglycoléthyletheracrylate ou le diéthylèneglycoléthylethermethacrylate.

**7.** Copolymère selon l'une des revendications 1 à 3 et 5, **caractérisé en ce que** le monomère B est le nonéthylèneglycolméthyletheracrylate ou le nonéthylèneglycolméthylethermethacrylate.

**8.** Copolymère selon l'une des revendications précédentes, **caractérisé en ce que** la partie A comprend des unités dérivant de monomères mono-alpha-éthylèniquement insaturés.

**9.** Copolymère selon l'une des revendications précédentes, **caractérisé en ce que** le bloc B comprend en plus des unités dérivant d'un monomère hydrophobe ou hydrophile.

**10.** Copolymère selon la revendication précédente, le monomère hydrophobe étant sélectionné dans le groupe constitué de:

- les alkylesters d'acides monocarboxyliques alpha-éthylèniquement insaturés, de préférence mono-alpha-éthylèniquement insaturés, comme l'acrylate de méthyle, l'acrylate d'éthyle, l'acrylate de n-propyle, l'acrylate de n-butyle, le méthacrylate de méthyle, le méthacrylate d'éthyle, le méthacrylate de n-propyle, le méthacrylate de n-butyle, et l'acrylate de 2-éthylhexyle, le méthacrylate de 2-éthylhexyle, l'acrylate d'isooctyle, le méthacrylate d'isooctyle, l'acrylate de lauryle, le méthacrylate de lauryle,
- le Versatate de vinyle,
- l'acrylonitrile,
- les nitriles vinyliques, comprenant de 3 à 12 atomes de carbone,
- les amides de vinylamines, et
- les composés vinylaromatiques comme le styrène.

**11.** Copolymère selon l'une des revendications précédentes, **caractérisé en ce que** la partie A est une partie neutre, anionique, ou cationique.

**12.** Copolymère selon l'une des revendications précédentes, **caractérisé en ce que** la partie A comprend des unités dérivant d'un monomère sélectionné dans le groupe constitué de:

- l'oxyde d'éthylène,
- l'alcool vinylique,
- la vinyle pyrrolidone,
- l'acrylamide, le méthacrylamide,
- le polyéthylène oxyde (méth)acrylate (i.e. acide (méth)acrylique polyéthoxylé),
- les esters hydroxyalkyles d'acides monocarboxyliques alpha-éthylèniquement insaturés, de préférence mono-alpha-éthylèniquement insaturés, comme l'acrylate de 2-hydroxyéthyle, et
- les amides hydroxyalkyles d'acides monocarboxyliques alpha-éthylèniquement insaturés, de préférence mono-alpha-éthylèniquement insaturés,
- le diméthylaminoéthyl (méth)acrylate, le diméthylaminopropyl (méth)acrylate, le ditertiobutylaminoéthyl (méth) acrylate, le diméthylaminométhyl (méth)acrylamide, le diméthylaminopropyl (méth)acrylamide;
- l'éthylènimine, la vinylamine, la 2-vinylpyridine, la 4- vinylpyridine;
- le chlorure de triméthylammonium éthyl (méth)acrylate, le méthylsulphate de triméthylammonium éthyl (méth) acrylate, le benzyle chlorure de diméthylammonium éthyl (méth)acrylate, le chlorure de 4-benzoylbenzyl diméthylammonium éthyl acrylate, le chlorure de triméthyl ammonium éthyl (méth)acrylamido (aussi dénommé 2-(acryloxy)éthyltriméthylammonium, TMAEAMS), le méthylsulphate de triméthylammonium éthyl (méth) acrylate (aussi dénommé 2-(acryloxy)éthyltriméthylammonium, TMAEAMS), le chlorure de triméthyl ammonium propyl (méth)acrylamido, le chlorure de vinylbenzyl triméthyl ammonium,
- la chlorure de diallyldiméthyl ammonium,
- les monomères alpha-éthylèniquement insaturés, de préférence mono-alpha-éthylèniquement insaturés, comprenant un groupe phosphate ou phosphonate,
- les acides monocarboxyliques alpha-éthylèniquement insaturés, de préférence mono-alpha-éthylèniquement insaturés, comme l'acide acrylique ou l'acide méthacrylique,
- les ester monoalkyles d'acides dicarboxyliques alpha-éthylèniquement insaturés, de préférence mono-alpha-éthylèniquement insaturés,
- les amides monoalkyles d'acides dicarboxyliques alpha-éthylèniquement insaturés, de préférence mono-alpha-éthylèniquement insaturés,

- les composés alpha-éthylèniquement insaturés, de préférence mono-alpha-éthylèniquement insaturés, comprenant un groupe acide sulfonique, et les sels de composés alpha-éthylèniquement insaturés, de préférence mono-alpha-éthylèniquement insaturés, comprenant un groupe acide sulfonique, comme l'acide vinylsulfonique, les sels de l'acide vinylsulfonique, l'acide vinylbenzene sulfonique, les sels de l'acide vinylbenzene sulfonique, l'acide alpha-acrylamidométhylpropanesulfonique, les sels de l'acide alpha-acrylamidométhylpropanesulfonique, le 2-sulphoéthyl méthacrylate, les sels du 2-sulphoéthyl méthacrylate, l'acide acrylamido-2-méthylpropanesulfonique (AMPS), les sels de l'acide acrylamido-2-méthylpropanesulfonique, et le sulfonate de styrène,
- les monomères de formule suivante:

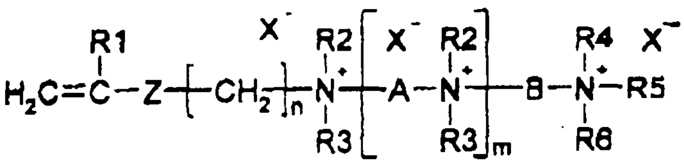

où

- $R_1$ est un atome d'hydrogène ou un groupe méthyle ou un groupe éthyle;
- $R_2$, $R_3$, $R_4$, $R_5$ and $R_6$, identiques ou différents, sont des groupes alkyle, hydroxyalkyle ou aminoalkyle linéaires ou branchés, en $C_1$-$C_6$, de préférence en $C_1$-$C_4$;
- m est un entier de 1 à 10, par exemple 1;
- n est un entier de 1 à 6, de preference de 2 à 4;
- Z représente un groupe -C(O)O- ou -C(O)NH- ou un atome d'oxygène;
- A représente un groupe $(CH_2)_p$, p étant un entier de 1 à 6, de préférence de 2 à 4;
- B représente une chaine polyméthylène linéaire ou branchée en $C_2$-$C_{12}$, avantageusement en $C_3$-$C_6$, éventuellement interrompue par un ou plusieurs hétéroatomes ou hétérogroupes, en particulier O ou NH, and éventuellement substituée par un ou plus groupe hydroxyle ou amino, de préférence un groupe hydroxyle;
- X, identiques ou différents, représentes des contre-ions, et

- leurs mélanges et les macromonomères qui en dérivent.

**13.** Copolymère selon l'une des revendications précédentes, **caractérisé en ce qu'**il est soluble dans l'eau.

**14.** Copolymère selon l'une des revendications précédentes, **caractérisé en ce que** le rapport en poids entre la partie B et la partie A est supérieure à 1/1.

**15.** Copolymère selon l'une des revendications 1 à 13, **caractérisé en ce que** le rapport en poids entre la partie B et la partie A est inférieur ou égal à 1/1.

**16.** Copolymère selon l'une des revendications précédentes, compris dans une formulation pharmaceutique, une formulation de soins ménagers, une formulation de soins personnels, une formulation phytosanitaire, ou une composition industrielle.

**17.** Utilisation du copolymère selon l'une des revendications 1 à 15

- comme émulsifiant ou co-émulsifiant,
- comme dispersant de particules solides,
- comme agent de traitement de surfaces, ou
- quand le copolymère est un copolymère à blocs où la partie A est un bloc hydrophile et la partie B est un bloc hydrophobe, comme membrane ou coquille, ou comme partie de celles-ci, de vésicules ou de capsules.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9801478 A
- WO 9858974 A
- WO 0226836 A
- US 20020198347 A1
- WO 0228932 A
- EP 887362 A
- WO 0177198 A
- WO 0116187 A
- US 20030013799 A1
- WO 03050185 A
- WO 0228357 A
- US 5314962 A
- US 6153705 A
- WO 9935178 A
- WO 9935177 A
- WO 9903894 A
- WO 9931144 A
- WO 0075207 A
- US 09980387 A
- WO 0210223 A
- WO 0222688 A
- WO 9630421 A
- WO 0002939 A
- WO 02082900 A
- FR 0301153 W
- EP 0301317 W
- EP 0301313 W
- EP 0301316 W
- WO 02090392 A
- EP 0302890 W
- EP 0305995 W
- EP 0301571 W
- WO 02090397 A
- WO 02090424 A


### Non-patent literature cited in the description


- **SCHMOLKA.** *J. Am. Oil Chem. Soc.,* 1977, vol. 54, 110
- **WILCZEK-VERAET et al.** *Macromolecules,* 1996, vol. 29, 4036
- **KATAYOSE ; KATAOKA.** *Proc. Intern. Symp. Control. Rel. Bioact. Materials,* 1996, vol. 23, 899
- **OTU et al.** *Makromol. Chem. Rapid. Commun,* 1982, vol. 3, 127
- **TATEMOTO et al.** Jap. Daikin Kogyo Co Ltd Japan, 1975, vol. 50, 127, 991
- **MATYJASZEWSKI et al.** *Macromolecules,* 1995, vol. 28, 2093
- Group Transfer Polymerization. **WEBSTER O.W.** Encyclopedia of Polymer Science and Engineering. Wiley Interscience, 1987, vol. 7, 580-588
- **D. BRAUN et al.** *Macromol. Symp.,* 1996, vol. 111, 63
- **WAYLAND et al.** *J. Am. Chem. Soc.,* 1994, vol. 116, 7973
- **KENNEDY, J.P.** *Macromolecules,* 1996, vol. 29, 8631
- **DEFFIEUX, A.** *MACROMOLECULES,* 1992, vol. 25, 6744
- **GNANOU, Y.** *MACROMOLECULES,* 1998, vol. 31, 6748